# FASCICULE DE BREVET EUROPEEN

(11) **EP 2 060 751 B1**
(45) Date de publication et mention de la délivrance du brevet: **10.08.2016**
(21) Numéro de dépôt: 08168315.3
(22) Date de dépôt: 04.11.2008
(51) Int. Cl.: F01D 25/24, F01D 11/08

(54) **Etage de turbine ou de compresseur d'un turboréacteur**
Turbinen- oder Kompressorstufe eines Turbotriebwerks
Turbine or compressor stage of a jet engine

(30) Priorité: 13.11.2007 FR 0707939
(43) Date de publication de la demande: 20.05.2009
(73) Titulaire: SNECMA, 75015 Paris (FR)
(72) Inventeur: Audeon, David, 91300 Massy (FR); Da Silva, David, 91260 Juvisy-sur-Orge (FR)
(74) Mandataire: Ramey, Daniel

(56) Documents cités:
- EP-A- 1 079 076
- EP-A- 1 717 418

## Description

La présente invention concerne un étage de turbine ou de compresseur, en particulier d'un turboréacteur d'avion.

Un étage de ce type comprend un distributeur formé d'une rangée annulaire d'aubes fixes de redressement portées par un carter du compresseur ou de la turbine, et une roue de rotor montée en amont du distributeur à l'intérieur d'un anneau sectorisé accroché sur le carter.

Le distributeur comprend deux parois de révolution, respectivement interne et externe, entre lesquelles s'étendent les aubes fixes de redressement.

L'anneau comprend à l'une de ses extrémités un rebord circonférentiel qui est serré radialement sur un rail annulaire du carter par l'intermédiaire d'un organe annulaire de verrouillage à section sensiblement en C, qui est engagé axialement sur le rail de carter et sur le rebord circonférentiel de l'anneau. L'organe de verrouillage comprend deux parois de révolution, respectivement interne et externe, qui sont reliées entre elles par une paroi sensiblement radiale. Cet organe est sectorisé et est formé de plusieurs verrous disposés circonférentiellement bout à bout, chaque verrou étant engagé en général sur le rebord d'un seul secteur de l'anneau et sur une partie correspondante du rail de carter.

Il est connu de monter une tôle annulaire d'étanchéité et de protection thermique entre l'extrémité aval de l'anneau et l'extrémité amont de la paroi de révolution externe du distributeur, notamment pour limiter les fuites de gaz chauds circulant dans la veine de la turbine ou du compresseur radialement vers l'extérieur et pour protéger thermiquement l'organe de verrouillage.

Dans la technique actuelle, cette tôle est sensiblement cylindrique et intercalée entre l'anneau et la paroi de révolution interne de l'organe de verrouillage. Elle n'est cependant pas correctement immobilisée en direction radiale et peut donc vibrer en fonctionnement et se détériorer.

Par ailleurs, chaque verrou est engagé sur le rail de carter et sur le rebord circonférentiel d'un secteur d'anneau avec une certaine précontrainte radiale. En fonctionnement, il apparaît un gradient radial de température relativement important dans chaque secteur d'anneau, ce qui entraîne un « décambrage » de ce secteur d'anneau. Ce phénomène se traduit essentiellement par une augmentation du rayon de courbure du secteur d'anneau, ce qui augmente les contraintes dans la partie médiane du verrou et peut réduire sa durée de vie. EP1717418 décrit un étage de turbine et un verrouillage qui comprend deux parois de révolution et une tôle de protection thermique.

L'invention a notamment pour but d'apporter une solution simple, efficace et économique à au moins une partie de ces problèmes.

Elle propose à cet effet un étage de turbine ou de compresseur, en particulier d'un turboréacteur, comprenant au moins une roue de rotor montée à l'intérieur d'un anneau sectorisé porté par un carter et comprenant un rebord circonférentiel serré radialement sur un rail annulaire du carter par un organe annulaire de verrouillage à section en C qui est engagé axialement sur le rail de carter et sur le rebord de l'anneau et qui comprend deux parois de révolution, respectivement interne et externe, reliées entre elles par une paroi sensiblement radiale, une tôle de protection thermique sensiblement cylindrique étant intercalée entre l'anneau et la paroi de révolution interne de l'organe, caractérisé en ce que la tôle, ou la paroi de révolution interne de l'organe, comprend au moins une surépaisseur qui s'étend radialement vers l'organe, ou la tôle, respectivement, et comporte des moyens d'appui radial sur l'organe, ou la tôle.

Selon l'invention, la tôle de protection thermique comprend une partie de plus grande épaisseur ou dimension radiale qui s'étend vers l'organe et est destinée à venir en appui radial contre cet organe pour immobiliser radialement la tôle, ou la paroi de révolution interne de l'organe comprend une partie de plus grande épaisseur ou dimension radiale qui s'étend vers la tôle et est destinée à venir en appui radial contre cette tôle pour l'immobiliser en direction radiale. Cet appui radial assure une légère précontrainte radiale de la tôle qui est alors immobilisée radialement et est empêchée de vibrer en fonctionnement du turboréacteur.

La surépaisseur de la tôle est par exemple formée par un bossage annulaire formé en saillie sur une surface extérieure de la tôle et comportant des moyens d'appui radial sur la paroi de révolution interne de l'organe de verrouillage.

En variante, l'organe de verrouillage comprend au moins une surépaisseur formée par un bossage à orientation circonférentielle formé en saillie sur une surface intérieure de sa paroi de révolution interne et comportant des moyens d'appui radial sur la tôle.

L'organe de verrouillage peut comprendre un seul bossage annulaire qui s'étend sur 360° ou bien des bossages circonférentiels qui sont à distance les uns des autres. Le ou chaque bossage permet de rigidifier l'organe afin que celui-ci résiste mieux aux contraintes transmises par le secteur d'anneau en fonctionnement. Les bossages circonférentiels permettent de limiter la quantité de matière nécessaire à la réalisation de la surépaisseur radiale de l'organe. Ils peuvent être réalisés par usinage, par exemple par fraisage, de la paroi de révolution interne de l'organe.

Lorsque l'organe est sectorisé et formé de plusieurs verrous disposés circonférentiellement bout à bout, au moins certains de ces verrous comportent chacun un bossage circonférentiel formé en saillie sur une surface intérieure de sa paroi interne.

Certains verrous de l'organe peuvent donc comprendre une surépaisseur radiale au niveau de leur paroi interne qui est en appui sur la tôle, et les autres verrous de l'organe peuvent être identiques à ceux de la technique antérieure et être espacés radialement de la tôle.

Le bossage de chaque verrou s'étend par exemple en direction circonférentielle sur au moins une partie de la largeur ou de l'étendue angulaire du verrou de façon à entraîner une faible variation de la masse de ce verrou.

Ce bossage est de préférence formé sur une partie médiane de la paroi interne du verrou. Dans ce dernier cas, le bossage renforce la partie médiane du verrou qui peut alors résister aux efforts transmis par la partie médiane du secteur d'anneau et s'opposer au décambrage de ce secteur d'anneau. On observe alors de faibles variations des jeux radiaux entre les sommets des aubes de la roue de rotor et les secteurs d'anneau, ce qui améliore les performances du turboréacteur.

L'invention concerne encore un turboréacteur, caractérisé en ce qu'il comprend au moins un étage de turbine ou de compresseur tel que décrit ci-dessus.

L'invention concerne également un organe annulaire de verrouillage pour un étage de turbine ou de compresseur du type précité, comprenant deux parois de révolution, respectivement interne et externe, reliées l'une à l'autre par une troisième paroi sensiblement radiale de sorte que le verrou ait en section une forme sensiblement en C, caractérisé en ce que sa paroi interne comprend au moins une surépaisseur qui s'étend radicalement vers l'intérieur.

L'invention concerne enfin une tôle sensiblement cylindrique de protection thermique pour un étage de turbine ou de compresseur du type précité, caractérisée en ce qu'elle comprend au moins une surépaisseur en saillie sur sa surface extérieure.

L'invention sera mieux comprise et d'autres caractéristiques, détails et avantages de celle-ci apparaîtront plus clairement à la lecture de la description qui suit, faite à titre d'exemple non limitatif et en référence aux dessins annexés dans lesquels :
- la figure 1 est une demi-vue schématique partielle en coupe axiale d'un étage de turbine selon la technique antérieure ;
- la figure 2 est une demi-vue schématique partielle en coupe axiale d'un étage de turbine selon la présente invention, à plus grande échelle ;
- la figure 3 est une vue schématique partielle de face d'un verrou et d'une tôle de protection thermique d'une variante de réalisation de l'étage selon l'invention, vu de l'aval ;
- la figure 4 est une vue en coupe selon la ligne IV-IV de la figure 3, à plus grande échelle.

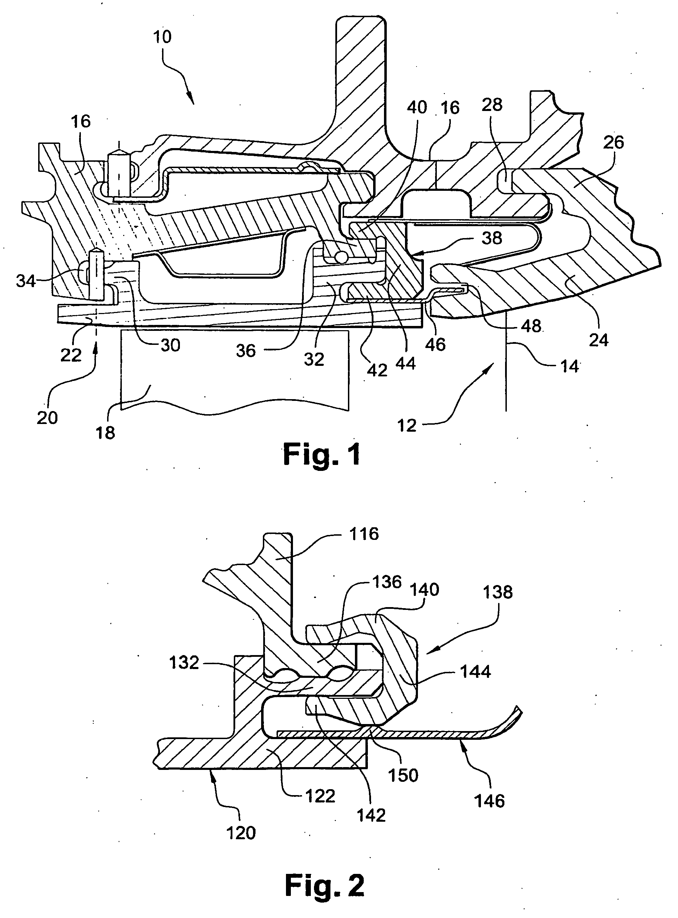

On se réfère d'abord à la figure 1 qui représente un étage de turbine 10 d'un turboréacteur, comprenant un distributeur 12 formé d'une rangée annulaire d'aubes fixes 14 portées par un carter 16 de la turbine, et une roue de rotor 18 montée en amont du distributeur 12 et tournant dans un anneau sectorisé 20 formé d'une pluralité de secteurs 22 qui sont portés circonférentiellement bout à bout par le carter 16 de la turbine.

Le distributeur 12 comprend deux parois de révolution externe 24 et interne (non visible), respectivement, qui délimitent entre elles la veine annulaire d'écoulement des gaz dans la turbine et entre lesquelles s'étendent radialement les aubes 14. La paroi externe 24 du distributeur comprend un rebord cylindrique 26 orienté vers l'amont et destiné à être engagé dans une rainure annulaire 28 orientée vers l'aval du carter 16.

Chaque secteur d'anneau 22 comprend une paroi à orientation circonférentielle qui comprend à ses extrémités amont et aval des rebords circonférentiels 30, 32 d'accrochage sur le carter 16 de la turbine. Les rebords circonférentiels amont 30 des secteurs d'anneau sont orientés vers l'amont et sont engagés dans une rainure annulaire 34 orientée vers l'aval du carter 16.

Les rebords circonférentiels aval 32 des secteurs sont situés à distance de l'extrémité aval de la paroi circonférentielle du secteur d'anneau. Ils sont orientés vers l'aval et serrés radialement sur un rail cylindrique 36 du carter au moyen d'un organe annulaire de verrouillage 38 à section en C dont l'ouverture est orientée axialement vers l'amont et qui est engagé axialement par déformation élastique depuis l'aval sur le rail de carter 36 et les rebords circonférentiels aval 32 des secteurs d'anneau. Les rebords aval 32 des secteurs d'anneau et le rail 36 du carter ont sensiblement le même rayon de courbure à l'arrêt du turboréacteur.

L'organe de verrouillage 38 comprend deux parois coaxiales de révolution 40 et 42, radialement externe et radialement interne respectivement, qui sont reliées entre elles à leurs extrémités aval par une paroi radiale 44, et qui sont engagées respectivement à l'extérieur du rail de carter 36 et à l'intérieur des rebords aval 32 des secteurs d'anneau.

La paroi radiale 44 de l'organe est interposée axialement entre les extrémités aval du rail 36 et des rebords 32 des secteurs, d'une part, et l'extrémité amont de la paroi de révolution externe 24 du distributeur 12, d'autre part, pour empêcher l'organe 38 de se déplacer axialement vers l'aval et de se désengager du rail de carter 36 et des rebords 32 des secteurs d'anneau.

L'organe de verrouillage 38 est sectorisé et formé de plusieurs verrous disposés circonférentiellement bout à bout, chaque verrou comportant deux parois parallèles 40, 42 à orientation circonférentielle, respectivement externe et interne, reliées entre elles par une paroi radiale 46.

Chaque verrou de l'organe 38 est engagé sur le rail de carter 36 et sur le rebord circonférentiel 32 d'un secteur d'anneau avec une certaine précontrainte radiale. Lors de l'engagement axial du verrou sur le rail 36 et le rebord aval 32 du secteur, le verrou se déforme élastiquement en direction radiale, par écartement de ses parois circonférentielles 40, 42.

En fonctionnement, le secteur d'anneau 22 est soumis à un gradient de température important en direction radiale, ce qui se traduit par un « décambrage » du secteur d'anneau qui a alors un rayon de courbure plus important qu'à l'état sans contrainte, son rayon de courbure devenant supérieur à celui du rail 36 du carter. Ce décambrage se traduit notamment par un déplacement radial vers l'intérieur de la partie médiane du rebord circonférentiel 32 du secteur, et donc par une augmentation significative des contraintes dans la partie médiane du verrou correspondant, qui peuvent réduire sa durée de vie.

Une tôle 46 sensiblement cylindrique d'étanchéité et de protection thermique est montée entre les secteurs d'anneau 22 et la paroi de révolution externe 24 du distributeur pour empêcher les fuites de gaz chauds depuis la veine de la turbine radialement vers l'extérieur, et pour protéger thermiquement l'organe de verrouillage 38 ainsi que les pièces environnantes.

L'extrémité amont de cette tôle 46 est engagée axialement sur les extrémités aval des parois circonférentielles des secteurs d'anneau 22 et est entourée par la paroi de révolution interne 42 de l'organe. Son extrémité aval est engagée dans une rainure annulaire 48 orientée vers l'amont et formée à l'extrémité amont de la paroi externe 24 du distributeur.

Cette tôle 46 n'est pas immobilisée radialement et vibre en fonctionnement, ce qui peut entraîner une détérioration de cette tôle voire des pièces voisines.

L'invention permet de remédier à au moins une partie des inconvénients décrits ci-dessus, grâce à une surépaisseur radiale formée sur la paroi interne de l'organe 38, ou sur la tôle 46, cette surépaisseur prenant appui sur la tôle, ou sur l'organe, respectivement, de façon à immobiliser cette tôle radialement sur l'extrémité aval des secteurs d'anneau 22.

Dans l'exemple de réalisation représenté en figure 2, la surépaisseur est formée sur la tôle 146 qui comprend au voisinage de son extrémité amont un bossage annulaire 150 qui s'étend sur 360° autour de l'axe de révolution de la tôle. Ce bossage 150 est formé en saillie sur la surface cylindrique extérieure de la tôle et s'étend radialement vers l'extérieur.

La périphérie externe du bossage 150 comprend une surface d'appui sur la surface intérieure de la paroi de révolution interne 142 de l'organe 138. Ce bossage permet de serrer radialement la tôle sur la surface cylindrique extérieure de l'extrémité aval de l'anneau 120.

La tôle 146 peut être dans ce cas engagée sur l'extrémité aval de l'anneau avant le montage de l'organe 138. Lors de l'engagement axial de l'organe 138 sur le rail de carter 136 et sur les rebords 132 des secteurs d'anneau, les parois 140, 142 de l'organe s'écartent l'une de l'autre et la paroi interne 142 vient s'intercaler entre les rebords aval 132 des secteurs et la tôle 146 et vient appliquer cette tôle sur les extrémités aval des secteurs d'anneau 122 avec une certaine précontrainte radiale.

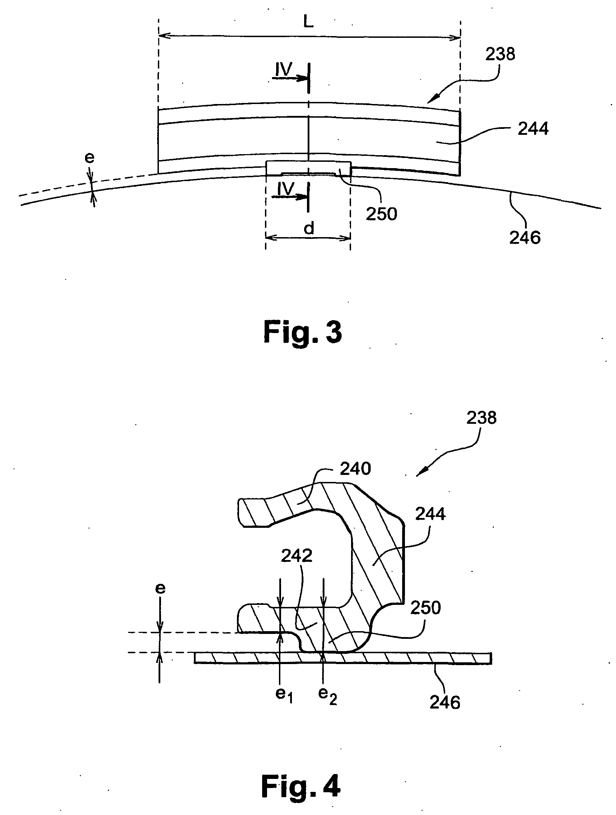

Dans la variante de réalisation représentée aux figures 3 et 4, la tôle 246 est comparable à celle de la technique antérieure et la paroi de révolution interne 242 de l'organe de verrouillage 238 comprend des surépaisseurs formées par des bossages 250 à orientation circonférentielle qui s'étendent radialement vers l'intérieur et qui sont en appui radial à leur périphérie interne sur la surface cylindrique extérieure de la tôle 246.

Les bossages 250 sont formés en saillie sur la surface intérieure de la paroi interne 242 de l'organe, et sont situés à distance les uns des autres. Lorsque l'organe 238 est formé de plusieurs verrous disposés bout à bout, au moins certains de ces verrous comprennent un bossage circonférentiel 250, comme cela est représenté en figure 3. Les verrous qui comprennent des bossages 250 sont en appui radial contre la tôle 246 alors que les autres verrous qui sont dépourvus de bossages sont écartés d'une distance radiale e de la tôle. Cette distance e correspond sensiblement à la valeur de la surépaisseur (e₂-e₁), c'est-à-dire de la différence entre l'épaisseur e₂ du bossage 250 et l'épaisseur e₁ du reste de la paroi interne 242 du verrou.

Dans l'exemple représenté, le bossage 250 s'étend sur une partie médiane de la paroi interne du verrou de façon à renforcer cette partie qui est soumise à des contraintes importantes en fonctionnement. Le bossage 250 a une largeur d ou étendue angulaire qui représente environ la moitié, de préférence le tiers, et par exemple le quart, de la largeur L du verrou 238. Le bossage 250 peut être obtenu par usinage, et par exemple par fraisage, des parties d'extrémités de la paroi interne 242 du verrou.

Les bossages 250 de l'organe permettent également de maintenir la tôle 246 sur les secteurs d'anneau avec une légère précontrainte radiale.

La tôle 246 et l'organe de verrouillage 238 peuvent être montés de la même façon que dans le mode de réalisation de la figure 2.

## Revendications

1. Etage de turbine ou de compresseur, en particulier d'un turboréacteur, comprenant au moins une roue de rotor montée à l'intérieur d'un anneau sectorisé (120) porté par un carter (116) et comprenant un rebord circonférentiel (132) serré radialement sur un rail annulaire (136) du carter par un organe annulaire de verrouillage (138, 238) à section en C qui est engagé axialement sur le rail de carter et sur le rebord de l'anneau et qui comprend deux parois de révolution, respectivement interne (142) et externe (140), reliées entre elles par une paroi sensiblement radiale (144), une tôle (146) de protection thermique sensiblement cylindrique étant intercalée entre l'anneau et la paroi de révolution interne de l'organe, **caractérisé en ce que** la tôle, ou la paroi de révolution interne de l'organe, comprend au moins une surépaisseur (150, 250) qui s'étend radialement vers l'organe, ou la tôle, respectivement, et comporte des moyens d'appui radial sur l'organe, ou la tôle.

2. Etage selon la revendication 1, **caractérisé en ce que** la surépaisseur est formée sur la tôle (146) qui comprend un bossage annulaire (150) formé en saillie sur une surface extérieure de la tôle et comportant des moyens d'appui radial sur la paroi de révolution interne (142) de l'organe de verrouillage.

3. Etage selon la revendication 1, **caractérisé en ce que** la surépaisseur est formée sur l'organe de verrouillage (238) qui comprend au moins un bossage (250) à orientation circonférentielle formé en saillie sur une surface intérieure de sa paroi de révolution interne (242) et comportant des moyens d'appui radial sur la tôle.

4. Etage selon la revendication 3, **caractérisé en ce que** l'organe (238) est sectorisé et est formé de plusieurs verrous disposés circonférentiellement bout à bout, au moins certains de ces verrous comportant chacun un bossage circonférentiel (250) formé en saillie sur une surface intérieure de sa paroi interne.

5. Etage selon la revendication 4, **caractérisé en ce que** le bossage (250) de chaque verrou s'étend en direction circonférentielle sur au moins une partie de la largeur (L) ou de l'étendue angulaire de ce verrou.

6. Etage selon la revendication 4 ou 5, **caractérisé en ce que** le bossage (250) de chaque verrou est formé sur une partie médiane de la paroi interne (242) de ce verrou.

7. Turboréacteur, **caractérisé en ce qu'**il comprend au moins un étage de turbine ou de compresseur selon l'une des revendications précédentes.

8. Organe annulaire de verrouillage pour un étage de turbine ou de compresseur selon l'une des revendications 1 à 6, comprenant deux parois de révolution, respectivement interne (242) et externe (240), reliées l'une à l'autre par une troisième paroi (244) sensiblement radiale de sorte que le verrou ait en section une forme sensiblement en C, **caractérisé en ce que** sa paroi interne comprend au moins une surépaisseur (250) qui s'étend radialement vers l'intérieur.

9. Tôle cylindrique de protection thermique pour un étage de turbine ou de compresseur selon l'une des revendications 1 à 6, **caractérisée en ce qu'**elle comprend au moins une surépaisseur (150) en saillie sur sa surface extérieure.

## Patentansprüche

1. Turbinen- oder Kompressorstufe, insbesondere eines Turbotriebswerks, mit mindestens einem Rotorrad, das in das Innere eines in Abschnitte unterteilten, von einem Gehäuse (116) getragenen Ringes (120) montiert ist, und einen Umfangrand (132) aufweist, der mittels eines ringförmigen Verriegelungselements (138, 238) mit C-förmigem Querschnitt radial auf eine ringförmige Schiene (136) des Gehäuses gespannt ist und axial auf der Schiene des Gehäuses und dem Rand des Ringes einrastet, und welche zwei umlaufende Seitenwände, eine innere (1542) und eine äußere (140), umfasst, welche durch eine im Wesentlichen radiale Wand (144) miteinander verbunden sind, wobei ein im Wesentlichen zylindrisches Wärmeschutzblech (146) das zwischen Ring und interner umlaufender Wand des Elements eingefügt ist, **dadurch gekennzeichnet, dass** das Blech oder die interne umlaufende Wand des Elements mindestens eine Verdickung (150, 250) aufweist, die sich radial zum Element oder zum Blech hin erstreckt, und auf dem Element oder Blech radiale Auflagemittel enthält.

2. Stufe nach Anspruch 1, **dadurch gekennzeichnet, dass** die Verdickung auf jenem Blech (146) geformt ist, welches eine ringförmige, an einer Außenfläche des Blechs vorspringende Erhöhung (150) aufweist, und an der inneren umlaufenden Wand (142) des Verriegelungselements radiale Auflagemittel aufweist.

3. Stufe nach Anspruch 1, **dadurch gekennzeichnet, dass** die Verdickung auf dem Verriegelungselement (238) gebildet wird, das mindestens eine Erhöhung (250) in Umfangsrichtung aufweist, die vorspringend auf einer Innenfläche der inneren umlaufenden Wand (242) gebildet wird, und radiale Auflagemittel auf dem Blech aufweist.

4. Stufe nach Anspruch 3, **dadurch gekennzeichnet, dass** das Element (238) in Abschnitte unterteilt und aus mehreren, am Umfang aneinanderstoßend angeordneten Riegeln gebildet wird, und zumindest einige dieser Riegel eine Erhöhung am Umfang (250) aufweisen, die auf einer Innenfläche der Innenwand vorspringt.

5. Stufe nach Anspruch 4, **dadurch gekennzeichnet, dass** sich die Erhöhung (250) jedes Riegels in Umfangsrichtung über mindestens einen Teil der Breite (L) oder die Winkelausdehnung dieses Riegels erstreckt.

6. Stufe nach Anspruch 4 oder 5, **dadurch gekennzeichnet, dass** die Erhöhung (250) jedes Riegels durch einen mittleren Teil der Innenwand (242) dieses Riegels gebildet wird.

7. Turbotriebwerk, **dadurch gekennzeichnet, dass** es mindestens eine Turbinen- oder Kompressorstufe nach einem der vorhergehenden Ansprüche enthält.

8. Ringförmiges Verriegelungselement für eine Turbinen- oder Kompressorstufe nach einem der Ansprüche 1 bis 5, das zwei umlaufende Wände enthält, von denen sich eine innen (242) und die andere außen (240) befindet, und welche durch eine im Wesentlichen radial verlaufende dritte Wand (244) miteinander verbunden sind, so dass der Riegel einen im Wesentlichen C-förmigen Querschnitt aufweist, **dadurch gekennzeichnet, dass** die Innenwand mindestens eine Verdickung (250) aufweist, die sich radial nach innen erstreckt.

9. Zylindrisches Wärmeschutzblech für eine Turbinen- oder Kompressorstufe nach einem der Ansprüche 1 bis 6, **dadurch gekennzeichnet, dass** sie an der Außenfläche mindestens eine vorspringende Verdickung (150) aufweist.

## Claims

1. A turbine or compressor stage, particularly for a turbojet, comprising at least one rotor disk mounted inside a sectorized ring (120) supported by a casing (116) and comprising a circumferential flange (132) radially clamped on an annular rail (136) of the casing by a C-shaped cross-section annular locking device (138, 238) which is axially engaged on the casing rail and on the flange of the ring and which comprises two annular walls, respectively inner (142) and outer (140), connected together through a substantially radial wall (144), a substantially cylindrical heat shielding foil (146) being interposed between the ring and the annular inner wall of the device, **characterized in that** the foil, or the annular inner wall of the device, comprises at least one extra thickness (150, 250) which radially extends toward the device, or the foil, respectively, and comprises radial bearing means on the device, or the foil.

2. A stage according to claim 1, **characterized in that** the extra thickness is formed on the foil (146) which comprises an annular protuberance (150) formed in a protruding manner on an outer surface of the foil and having radial bearing means on the annular inner wall (142) of the locking device.

3. A stage according to claim 1, **characterized in that** the extra thickness is formed on the locking device (238)which comprises at least one circumferentially directed protuberance (250) formed in a protruding manner on an inner surface of its inner wall (242) and having radial bearing means on the foil.

4. A stage according to claim 3, **characterized in that** the device (238) is sectorized and is made of a plurality of locks circumferentially disposed in an abutting manner, at least some of those locks each having a circumferential protuberance (250) formed in a protruding manner on an inner surface of its inner wall.

5. A stage according to claim 4, **characterized in that** the protuberance (250) of each lock extends in a circumferential direction on at least a part of the width (L), or angular extent, of this lock.

6. A stage according to claim 4, **characterized in that** the protuberance (250) of each lock is formed on a median portion of the inner wall (242) of this lock.

7. A turbojet, **characterized in that** it comprises at least one turbine or compressor stage according to any one of the preceding claims.

8. An annular locking device for a turbine or compressor stage according to any one of claims 1 to 6, comprising two annular walls, respectively inner (242) and outer (240), connected together by a third substantially radial wall (244) so that the lock has a substantially C-shaped cross-section, **characterized in that** its inner wall comprises at least one extra thickness (250) which extends radially inwardly.

9. A cylindrical heat shielding foil for a turbine or compressor stage according to any one of claims 1 to 6, **characterized in that** it comprises at least one extra thickness (150) protruding on its outer surface.
